## Europäisches Patentamt
## European Patent Office
## Office européen des brevets

(19)

(11) Numéro de publication: **0 125 976 B1**

# (12) FASCICULE DE BREVET EUROPÉEN

(45) Date de publication du fascicule du brevet: **05.11.86**

(51) Int. Cl.⁴: **B 60 H 1/00**

(21) Numéro de dépôt: **84400894.6**

(22) Date de dépôt: **03.05.84**

(54) Dispositif à volets pour distribuer le flux d'air dans une installation de climatisation de véhicule automobile.

(30) Priorité: **05.05.83 FR 8307510**

(43) Date de publication de la demande:
**21.11.84 Bulletin 84/47**

(45) Mention de la délivrance du brevet:
**05.11.86 Bulletin 86/45**

(84) Etats contractants désignés:
**DE FR GB IT**

(56) Documents cité:
**FR-A-1 465 433**
**FR-A-2 111 594**
**GB-A-1 052 458**

(73) Titulaire: **REGIE NATIONALE DES USINES RENAULT, Boîte postale 103 8-10 avenue Emile Zola, F-92109 Boulogne- Billancourt (FR)**

(72) Inventeur: **Colinet, André, 33, rue Carteault, F-92800 Puteaux (FR)**
Inventeur: **Schwartz, Christian, 769, avenue du Général Leclerc, F-92100 Boulogne Billancourt (FR)**
Inventeur: **Beaudon, Dominique, 16, Placette des Pommiers, F-78510 Triel Sur Seine (FR)**

(74) Mandataire: **Kohn, Philippe, Régie Nationale des Usines Renault- S.0804, F-92109 Boulogne Billancourt Cedex (FR)**

EP 0 125 976 B1

LIBER, STOCKHOLM 1986

## Description

La présente invention se rapporte à un dispositif à volets pour distribuer et répartir le flux d'air dans une installation de climatisation de véhicule automobile.

On sait que dans une installation de climatisation de véhicule automobile classique, la fonction de répartition du flux d'air est réalisée au moyen de plusieurs volets, souvent deux volets dans les installations relativement simples assurant des configurations de distribution limitées, parfois trois volets dans des installitions plus complexes, le volet supplémentaire servant généralement à assurer une fermeture centralisée de la distribution d'air à la ventilation (aérateur). Ces installations complexes ont un coût très élevé.

Les volets qui assurent la distribution sont parfois commandés séparément, ce qui entraîne une grande complexité du tableau de commande et, aussi, des difficultés de compréhension pour l'utilisateur avec le risque pour celui-ci de réaliser des configurations de répartition du flux d'air qui ne soient pas compatibles avec un fonctionnement optimal, ou même correct, de l'installation de climatisation. Un jugement négatif peut alors être émis sur la qualité de l'installation qui, en fait, est mal utilisée.

Dans d'autres cas, les volets de distribution sont commandés simultanément, ce qui n'écessite une réduction du nombre possible des configurations de répartition de flux d'air, ou impose de neutraliser l'effet du déplacement de certains volets pour certaines configurations grâce à des masques, des écopes, ou à des courses mortes, etc... ou encore rend nécessaires une assistance obtenue à partir d'une source d'énergie extérieure, et l'utilisation d'actionneurs, tous artifices conduisant à une conception extrêmement complexe de l'installation, avec un coût plus élevé. Il en résulte aussi des réductions des sections de passage utiles et des pertes de charge supplémentaires néfastes aux performances de débit de l'installation.

Le brevet GB-A- 1 052 458 décrit un système de chauffage et de ventilation pour véhicules à moteur, comprenant un boîtier 1 de distribution de flux d'air comportant trois sorties 7, 8, 9 contrôlées chacune par des clapets pivotants et par un clapet pivotant interne 4 permettant de régler le débit d'air traversant un radiateur de chauffage 5. Sur la figure 1, on voit en coupe schématique la position des clapets pour la situation: "obturation de tous les orifices". la figure 2 illustre la position obtenue ensuite sur la commande continue de ventilation 12 et correspondant à la situation "désembuage". La position obtenue ensuite sur la commande continue 12 et illustrée à la figure 3 correspond à la situation: "chauffage de l'habitacle". La position finale de la commande continue de ventilation illustrée à la figure 4 correspond à la situation ventilation de désembuage et de l'habitacle".

La présente invention a pour objet un dispositif de distribution du flux d'air dans une installation de climatisation de véhicule automobile permettant une simplification très importante du dispositif illustré dans le brevet GB-A- 1 052 458 en réduisant notamment le nombre de volets utilisés pour une même distribution.

Dans ce but l'invention propose un dispositif pour distribuer le flux d'air dans une installation de climatisation de véhicule automobile, comprenant un boîtier de distribution du flux dans lequel des moyens de répartition sont adaptés à diriger le flux d'air entrant dans ledit boîtier vers trois orifices correspondant respectivement à une sortie pour la ventilation, à une sortie pour le désembuage et à une sortie pour le chauffage, les orifices de désembuage et de chauffage étant disposés de part et d'autre de l'orifice de ventilation, caractérisé en ce que les moyens de répartition consistent respectivement en un premier volet et un second volet tous deux mobiles, le premier volet entre une position de fermeture de l'orifice de désembuage, pour laquelle ce volet dégage l'orifice de ventilation, et une position de fermeture de ce dernier orifice, pour laquelle ledit volet dégage l'orifice de désembuage, et le second volet, entre une position de fermeture de l'orifice de chauffage, pour laquelle ce volet dégage l'orifice de ventilation, et une position de fermeture de l'orifice de ventilation, pour laquelle ledit second volet dégage l'orifice de chauffage, ces deux volets ne fermant jamais simultanément l'orifice de ventilation, ces deux volets étant adaptés à prendre chacun toutes les positions intermédiaires entre leurs positions extrêmes et à assurer ainsi une répartition du flux entre les deux orifices auxquels ils sont respectivement associés.

Le dispositif comprend une pièce de commande reliée à un organe de commande à distance, ladite pièce étant adaptée à agir sur les premier et second volets.

La pièce de commande comporte trois organes de liaison adaptés à coopérer respectivement, le premier avec un organe complémentaire relié au premier volet, les deux autres avec des organes complémentaires reliés au second volet.

Selon un mode de réalisation préféré de l'invention, la pièce de commande montée à rotation autour d'un axe comporte trois doigts situés sur des rayons différents de cette pièce et coopérant respectivement avec une lumière d'un levier relié au premier volet mobile autour d'un axe parallèle à l'axe de la pièce de commande, et avec deux lumières ouvertes ménagées aux deux extrémités d'un second levier relié au second volet et mobile autour d'un axe parallèle également à ladite pièce de commande.

Les deux volets assurent chacun la fermeture de l'orifice de ventilation, qui assure la distribution ventilation vers les aérateurs.

Les positions intermédiaires du premier volet assurent une répartition du flux d'air entre désembuage/dégivrage et ventilation, tandis que les positions intermédiaires du second volet permettent une répartition du flux d'air entre ventilation et chauffage de l'habitacle.

Par ailleurs, ces positions intermédiaires assurant la répartition du flux d'air dans une zone où la température de l'air n'est pas totalement homogène, permettent de créer une différenciation de température de l'air entre ventilation et chauffage de l'habitacle (air de ventilation ayant par exemple une température inférieure de 8°C à celle de l'air de chauffage de l'habitacle, cette différence étant variable selon les conditions climatiques). Cette différenciation est recherchée pour le confort des utilisateur.

De plus, comme on le verra plus loin, les positions intermédiaires conjuguées des deux volets permettent d'assurer une fuite permanente à la ventilation, qui est compatible avec le confort des utilisateurs et qui autorise en outre le désembuage des vitres latérales du véhicule, lorsque cette fonciton est assurée par des aérateurs latéraux en planche de bord.

Enfin, en position de ventilation maximale les orifices de désembuage et de chauffage étant fermés, les volets permettent les meilleures sections de passage du flux d'air avec un minimum de pertes de charge, ce qui autorise le meilleur débit d'air possible. Dans cette configuration de ventilation, le débit d'air maximum est toujours souhaitable.

Selon une variante de réalisation, la pièce de commande est montée à rotation autour d'un axe et les organes de liaison de ladite pièce sont des secteurs dentés coopérant avec des secteurs dentés portés respectivement par le volet, par une pièce solidaire du second volet et par une pièce intermédiaire, cette dernière comportant en outre un autre secteur denté adapté à coopérer avec un secteur denté complémentaire porté par la pièce, les volets et les pièces étant montés à rotation sur des axes parallèles à l'axe de la pièce de commande.

La pièce intermédiaire est agencée de manière à être en prise avec le secteur denté de la pièce de commande, lorsque la pièce solidaire du second volet cesse d'être en prise avec le secteur denté correspondant de cette pièce de commande, cela lors de la rotation, de cette pièce de commande qui détermine les différentes étapes du procédé.

De même, à chacun des volets est associé un organe de rappel dudit volet vers une position de fermeture d'un orifice, pour laquelle la liaison du volet avec la pièce de commande est momentanément interrompue.

Les caractéristiques et avantages de l'invention ressortiront d'ailleurs mieux de la description suivante, donnée uniquement à titre d'exemple, en référence aux dessins annexés dans lesquels:

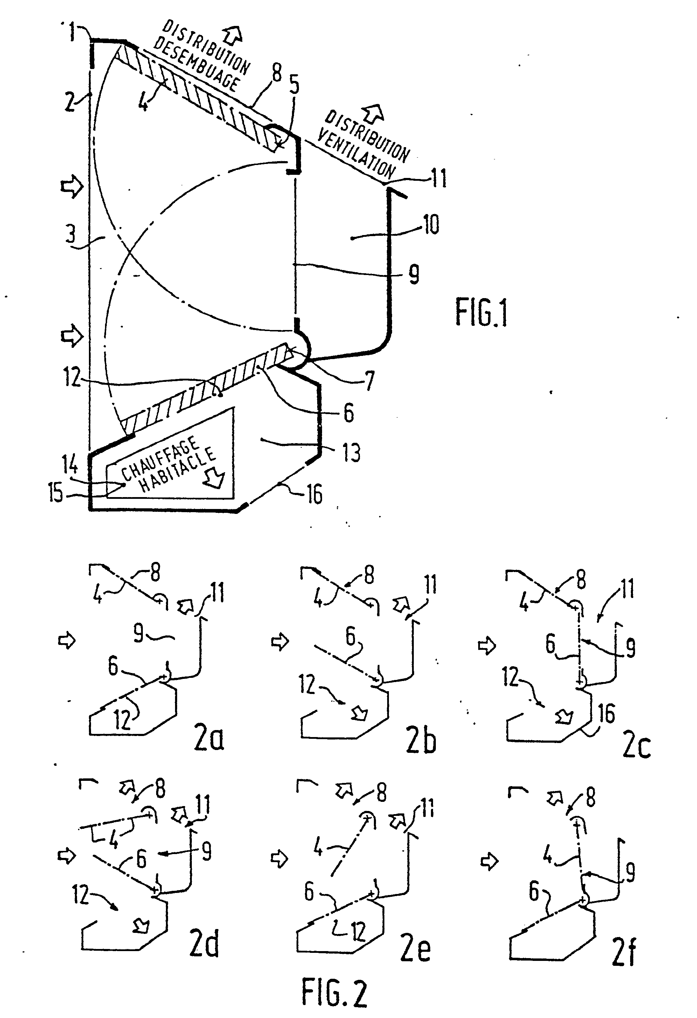

- la figure 1 est une vue schématique en coupe d'une forme de réalisation d'un dispositif selon l'invention pour la mise en oeuvre du procédé de distribution du flux d'air, ce dispositif comportant deux volets de distribution;
- les figures 2a à 2f montrent schématiquement le même dispositif à plus petite échelle, ces figures correspondant à diverses ètapes du procédé:
- la figure 2a correspond, comme la figure 1, à la ventilation maximale, sans désembuage ni chauffage;
- la figure 2b correspond à une configuration ventilation et chauffage;
- la figure 2c correspond au chauffage maximum de l'habitacle;
- la figure 2d correspond à une configuration assurant à la fois le chauffage de l'habitacle, mais aussi une fuite vers le désembuage et vers la ventilation;
- la figure 2e correspond au désembuage/dégivrage avec ventilation; et,
- la figure 2f montre la configuration qui assure le désembuage/dégivrage maximum, sans ventilation annexe.

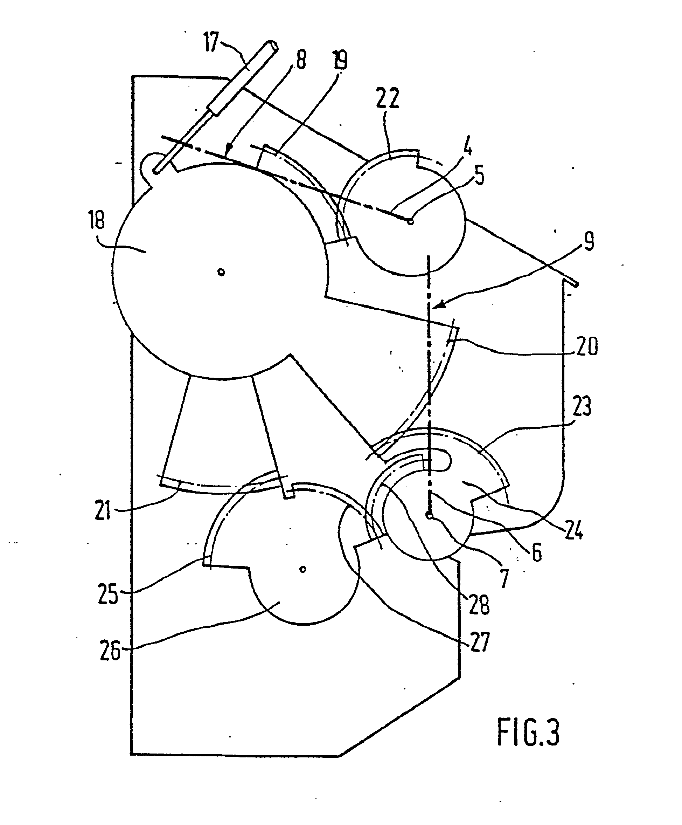

- la figure 3 montre une forme de réalisation du dispositif de la figure 1, dans laquelle les volets de distribution sont liés cinématiquement l'un à l'autre par un ensemble de secteurs dentés engrenant les uns dans les autres, cet ensemble étant actionné par un organe de manoeuvre unique;

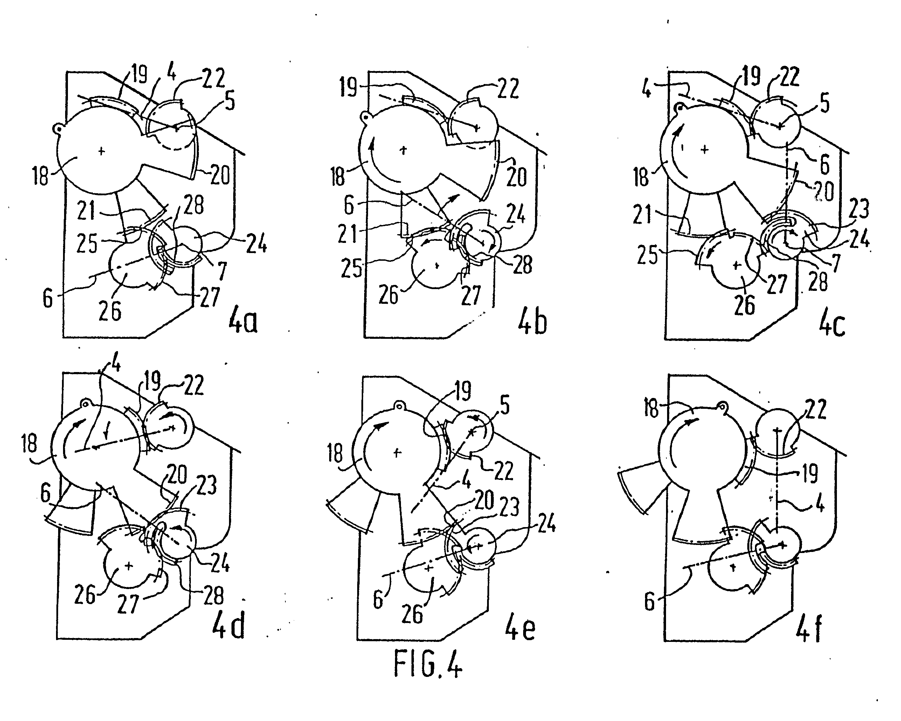

- les figures 4a à 4f, analogues aux figures 2a à 2f. illustrent les mêmes étapes du procédé;

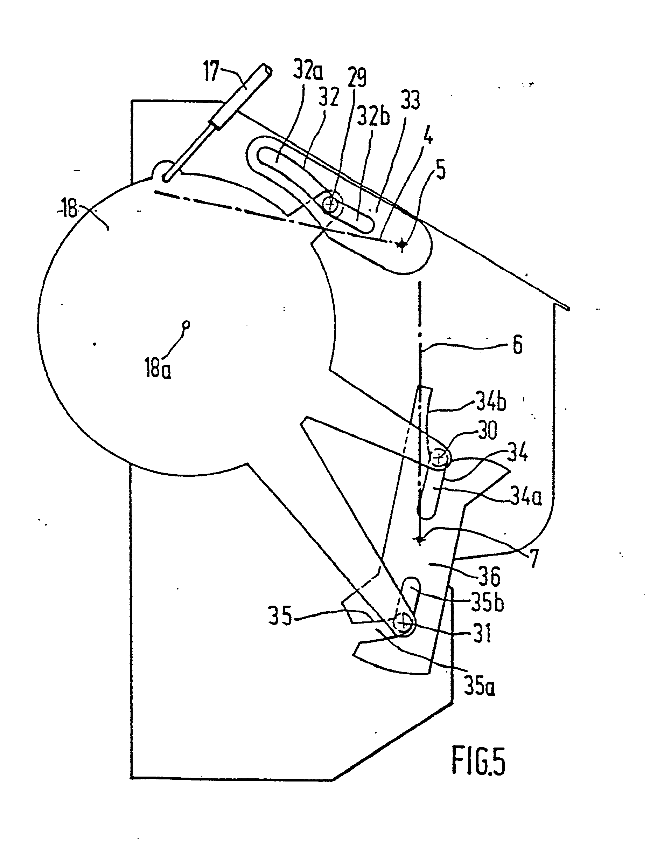

- la figure 5 montre une forme de réalisation préférée du dispositif de la figure 1, dans laquelle les volets de distribution sont liés cinématiquement l'un à l'autre par une timonerie actionnée par un organe de manoeuvre unique;

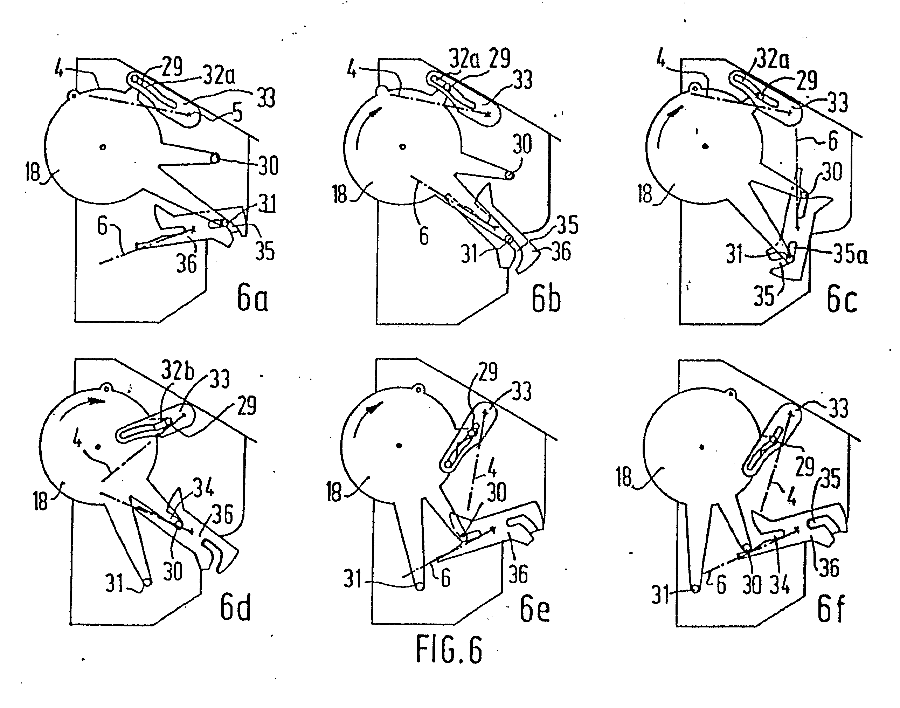

- les figures 6a à 6f, analogues aux figures 2a à 2f, illustrent les mêmes étapes du procédé.

Le dispositif selon l'invention, dans la forme de réalisation choisie et représentée à la figure 1, comprend un boîtier 1 muni d'un orifice 2 assurant l'entrée du flux d'air dans une chambre 3 munie de deux volets, l'un dénommé ci-après volet de désembuage 4, monté à pivotement autour d'un axe 5, l'autre dénommé volet de pieds 6, monté à pivotement autour d'un axe 7; ces volets sont adaptés, par leurs pivotements autour de leurs axes respectifs à obturer ou dégager plus ou moins complétement trois orifices également ménagés dans le boîtier 1:
- un orifice 8 assure la distribution du flux d'air pour le désembuage/ dégivrage du pare-brise notamment:
- un autre orifice 9, adjacent au précédent, l'axe 5 du volet 4 se trouvant dans la région adjacente aux deux orifices 8 et 9, par l'intermédiaire d'une chambre 10 et d'une sortie 11, assurant la distribution du flux d'air pour la ventilation; de préférence l'orifice 8 et la sortie 11 sont disposés dans un même plan, ce qui permet un raccordement plus aisé avec les éléments de distribution de la planche de bord;
- un troisième orifice enfin 12, adjacent à l'orifice 9, l'axe 7 du volet 6 se trouvant dans la région adjacente à ces deux orifices 9 et 12, assurant par l'intermédiaire d'une chambre 13 et de deux sorties 14 et 15, latérales et symétriques, le chauffage de l'habitacle, vers le conducteur et le passager avant.

Dans certaines versions de véhicules, notamment ceux destinés aux climats froids, la chambre 13 peut être équipée d'une troisième sortie 16 assurant par un conduit de distribution approprié le chauffage vers les places arrières.

Comme on l'a déjà indiqué, les figures 2a à 2f illustrent diverses étapes du fonctionnement du dispositif de la figure 1, mettant en oeuvre le procédé selon l'invention.

La figure 2a montre la configuration assurant une ventilation maximale, les volets 4 et 6 obturant respectivement, de manière complète, les orifices 8 et 12; pour la ventilation, les sections offertes au flux d'air sont maximales et les pertes de charge réduites, d'où un débit maximum.       -

La figure 2b montre un soulèvement du volet de pieds 6, le volet 4 restant en position de fermeture: le flux d'air qui est partagé entre l'orifice 11 et l'orifice 12 assure à la fois la ventilation de l'habitacle et le chauffage de celui-ci, avec une différenciation de la température de l'air soufflé entre ventilation et chauffage pour un meilleur confort de l'utilisateur. La position angulaire du volet 6 règle la répartition du flux d'air.

A la figure 2c, le volet 6 poursuivant son mouvement obture l'orifice 9 de ventilation. Tout le flux d'air est utilisé pour le chauffage de l'habitacle.

A la figure 2d, les volets 4 et 6 sont tous deux écartés des orifices 8 et 9 qu'ils obturaient; il y a alors chauffage de l'habitacle par une partie de flux d'air et dérivation du reste de ce flux à la fois vers l'orifice 8 de désembuage/dégivrage et vers l'orifice 9 de ventilation. On assure ainsi à la fois le maintien de la visibilité à travers le pare-brise et aussi une ventilation qui, notamment, peut assurer un désembuage des vitres latérales si cette fonction existe, et est obtenue grâce à des aérateurs latéraux de planche de bord.

Dans la configuration de la figure 2e, le volet 6 ferme complètement l'orifice 12 de chauffage et le flux d'air est réparti entre le désembuage et la ventilation, en fonction de la position du volet 4. Les considérations relatives à la figure 2d s'appliquent là aussi.

Enfin, la figure 2f correspond à la configuration assurant un désembuage/dégivrage maximal, puisque tout le flux d'air est canalisé vers l'orifice 8.

Dans le cas où le désembuage des vitres latérales du véhicule est assuré par des aérateurs latéraux de la planche de bord, cette dernière configuration permet d'assurer le désembuage/dégivrage maximum du pare-brise, sans qu'il soit nécessaire de fermer chacun des aérateurs par son volet de fermeture propre, comme ce serait le cas si la configuration de la figure 2e était seule réalisable.

Ainsi, grâce à deux volets seulement, on réalise un système de distribution de flux d'air qui permet la totalité des configurations de répartition de ce flux selon les considérations de confort physiologique et physique recherchées. Par ailleurs, les performances aérodynamiques de l'installation ne sont pas altérées et, comme on le verra mieux ci-après, les volets peuvent être commandés à partir d'un tableau de commande ne comportant qu'un seul organe de commande.

Dans la forme de réalisation représentée aux figures 3 et 4a à 4f, l'organe de commande unique agit sur un ensemble de secteurs dentés engrenant ou non les uns dans les autres, deux de ceux-ci étant directement fixés sur les axes des volets de désembuage et de pieds.

La figure 3, analogue dans ces grands traits à la figure 1, montre le dispositif de distribution d'air dans la configuration correspondant au chauffage de l'habitacle maximal. les volets 4 et 6 obturant les orifices 8 et 9.

Un organe de commande à distance constitué par un câble 17, manoeuvrable au tableau de commande, est relié à une pièce de commande 18 montée à rotation, comportant trois secteurs dentés 19, 20 et 21.

Le secteur 19 est en prise avec un secteur denté 22 solidaire de l'axe 5 du volet 4 et solidaire ainsi de ce volet.

Le secteur denté 20 est lui même en prise avec un secteur denté 23 d'une pièce 24 solidaire de l'axe 7 du volet de pieds 6 et de ce volet, tandis que le secteur denté 21 est en prise avec un secteur denté 25, d'une pièce 26 montée à rotation, cette dernière comportant un autre secteur denté 27 lui même en prise avec un secteur dentè 28 de la pièce 24, déjà porteuse du secteur 23.

Les figures 4a à 4f illustrent les étapes de fonctionnement du dispositif (qui correspondent aux configurations des figures 2a à 2f) et parmi celles-ci, la figure 4c montre la même configuration que la figure 3.

Dans la configuration de la figure 4a, (ventilation maximale), seul le secteur denté 21 de la pièce de commande 18 est en prise avec le secteur 25 de la pièce 26, l'autre secteur 27 de celle-ci étant en prise avec le secteur denté 28 de la pièce 24 fixée sur l'axe 7.

Le volet de désembuage 4 solidaire du secteur denté 22 qui, pour cette configuration n'est pas en prise avec le secteur denté 19 de la pièce de commande 18 est maintenu en position d'obturation de l'orifice de désembuage par un ressort de rappel ou autre organe analogue.

Dans la configuration de la figure 4b (ventilation et chauffage), on a fait tourner la pièce de commande 18 dans le sens des aiguilles d'une montre, d'une fraction de tour: le secteur 21 de cette piéce a entraîné la pièce 26, et, par l'intermédiaire de celle-ci, la pièce 24 et le volet 6 qui a dégagé l'orifice de chauffage.

Le volet 4, non sollicité, est resté en position.

Dans la configuration de la figure 4c, la pièce de commande 18 a pour suivi sa rotation et, toujours par l'intermédiaire de la pièce 26, le volet de pieds 6 est arrivé en position de fermeture de l'orifice de ventilation, le volet de désembuage étant toujours en position de fermeture. A noter que, dans cette configuration, le secteur denté 21 de la pièce 18 est sur le point d'échapper au secteur denté 25 de la pièce 26 dont, de la même manière, le secteur denté 27 est sur le point d'échapper au secteur 28 de la pièce 24.

Simultanément, le secteur denté 23 de cette pièce 24 est sur le point d'engrener avec le secteur denté 20 de la pièce de commande 18, tandis que le secteur denté 19 de celle-ci est sur le point d'engrener avec le secteur denté 22 solidaire de l'axe 5 et du volet 4. Cependant, le volet 4 reste en position de fermeture de l'orifice de désembuage, et on obtient par fermeture de l'orifice de ventilation la configuration de chauffage maximal de l'habitacle.

Dans la configuration de la figure 4d, la rotation de la pièce de commande 18 dans le sens horaire se poursuit: le secteur denté 19, en prise avec le secteur denté 22, provoque la rotation du volet 4 et l'ouverture partielle de l'orifice de désembuage, tandis que le secteur denté 20, en prise avec le secteur denté 23, provoque la rotation de la pièce 24 et ainsi l'ouverture partielle de l'orifice de ventilation. En effet, la pièce 24 est maintenant entraînée directement en rotation par la pièce de commande 18, et non plus par l'intermédiaire de la pièce 26, ce qui a changé le sens de manoeuvre du volet 6.

Il convient de noter que la pièce 24, pendant ce mouvement, a entraîné, par son secteur 28 en prise avec le secteur 27 de la pièce 26, cette dernière pièce en rotation. Cette rotation est sans influence sur la position des volets mais assure un positionnement relatif des pièces 24 et 26 nécessaire à la suite du mouvement.

La configuration de la figure 4e correspond à la position de désembuage/dégivrage et ventilation; les mouvements amorcés précédemment à la figure 4d se poursuivent, jusqu'à la fermeture de l'orifice de chauffage par le volet de pieds 6. On notera que dans la configuration de la figure 4e, le secteur denté 20 de la pièce de commande 18 est sur le point d'échapper au secteur denté 23 de la pièce 24 solidaire du volet 6. Ce dernier volet sera maintenu en position de fermeture de l'orifice de chauffage, pendant le passage à la configuration suivante, par un ressort de rappel ou autre dispositif analogue.

Le passage à la configuration 4f s'opère par la poursuite de la rotation de la pièce de commande 18, le secteur 19 de celle-ci entraînant, par son secteur 22, le volet de désembuage 4 vers la position de fermeture de l'orifice de ventilation.

On obtient ainsi la configuration de désembuage/dégivrage maxima.

On peut effectuer la manoeuvre en sens inverse et repasser par les configurations décrites en inversant la commande au niveau du tableau de commande.

Il est possible d'intervenir sur les rapports d'entraînement des divers secteurs dentés pour obtenir toutes les positions intermédiaires de volets jugées utiles.

Les figures 5 et 6a à 6f illustrent une autre forme de réalisation du dispositif selon l'invention, dans laquelle la commande de volets est opérée par l'intermédiaire d'une timonerie, comprenant des leviers reliés chacun d'un des volets et en prise par l'intermédiaire de glissières avec des doigts d'entraînement solidaires d'une pièce de commande rotative, sur laquelle agit l'organe de commande accessible du tableau de commande.

Dans le dispositif représenté à la figure 5, un câble de commande à distance 17 solidaire d'un organe de manoeuvre accessible du tableau de commande, est relié à une pièce de commande 18 montée à rotation autour d'un axe 18a.

Cette pièce 18 porte trois doigts cylindriques d'entraînement 29, 30 et 31, situés à des distances croissantes de l'axe 18a, sur des rayons distincts.

Le doigt d'entraînement 29 est engagé dans une lumière 32 d'un levier 33 solidaire de l'axe 5, lui même relié au volet de désembuage 4.

De la même manière, les doigts 30 et 31 sont respectivement engagés dans les lumières 34 et 35 ménagées aux deux extrémités d'un levier 36 solidaire, en sa partie centrale de l'axe 7, lui même relié au volet de pieds 6.

A la figure 3, les volets 4 et 6 obturent respectivement les orifices de désembuage et de ventilation du dispositif. C'est la configuration de la figure 6c.

On notera que dans cette configuration, le doigt 29 est sensiblement dans la région centrale de la lumière 32, entre une partie incurvée 32a de ladite lumière, qui pour la position correspondante du levier 33 est sensiblement centrée sur l'axe 18a, et une partie rectiligne 32b qui, pour cette même position, va s'écartant de ce même axe 18a, depuis la région centrale de ladite lumière.

Dans cette même configuration, le doigt 30 est à l'entrée d'une partie étroite 34a de la lumière correspondante 34, précédée d'une portion évasée 34b, tandis que le doigt 31 est dans la région centrale de la lumière 35 entre une partie d'entrée 35a, incurvée, centrée pour la position correspondante du levier 36 sur l'axe 18a, et une partie rectiligne 35b qui va se rapprochant dudit axe 18a depuis cette région centrale de ladite lumière 35.

Pour la configuration de la figure 6a, dans laquelle le volet 4 ferme l'orifice de désembuage et le volet 6 celui de chauffage, le doigt 29 est à l'extrémité de la partie incurvée 32a de la lumière 32 la plus éloignée de l'axe 5 et maintient le volet 4; de la même manière, le doigt 31 est dans la région centrale de la lumière 35, entre partie incurvée 35a et partie rectiligne 35b. Il maintient le volet 6. Le doigt 30 est libre de tout engagement avec le levier 36.

Dans la configuration de la figure 6b, la pièce de commande 18, sous l'action de l'organe de manoeuvre, a tourné dans le sens horaire.

Dans cette rotation, le doigt 29 parcourt la partie incurvée 32a de la lumière 32, axée sur l'axe 18a, et est sans action sur le levier 33, donc sur le volet 4 maintenu en position. Par contre, le doigt 31, descendant dans la lumière 35 provoque le basculement du levier 36 et le soulèvement du volet 6 qui dégage l'orifice de chauffage.

Le passage à la configuration 6c est obtenu par un complément de rotation de la pièce de commande 18. Le doigt 29 arrive à la fin de la partie curviligne 32a de la lumière 32 du levier 33 et le volet 4 reste fermé. Le levier 36 a poursuivi son basculement et arrive à l'extrémité de la partie rectiligne 35b de la lumière 35 du levier 36, le volet 6 lié à celui-ci obturant l'orifice de ventilation. Le doigt 30 est alors parvenu à l'entrée de la partie étroite 34a de la lumière 34. C'est la configuration de chauffage maximal de l'habitacle.

Quand la rotation de la pièce de commande 18 se poursuit, le doigt 29, parvenu dans la partie rectiligne 32b de la lumière 32 provoque le basculement vers le bas du levier 33 et du volet 4 qui lui est lié. De son côté, le doigt 30 pénètre dans la lumière 34 et provoque le basculement du levier 36 dans le sens anti-horaire, le volet 6 dégageant l'orifice de ventilation. C'est la configuration de distribution du flux d'air entre les divers orifices de la figure 6d.

Le sens de manoeuvre du volet 6 s'est inversé et le doigt 31 a échappé au levier.

Quand la rotation de la pièce de commande 18 se poursuit encore, on parvient à la configuration de la figure 6e dans laquelle le déplacement des volets 4 et 6 s'est amplifié, jusqu'à la fermeture de l'orifice de chauffage.

Enfin, on parvient à la configuration de la figure 6f, pour laquelle les orifices de ventilation et de chauffage sont fermés.

Le doigt d'entraînement 29, engagé dans la partie rectiligne de la lumière 32 du levier 33 a entraîné le volet 4, lié à ce levier, en position de fermeture de l'orifice de ventilation, tandis que le doigt 30 se déplaçant à l'entrée de la lumière 34 maintient le levier 36 dans la position correspondant à la fermeture de l'orifice de chauffage par le volet 6.

Par la rotation en sens contraire de la pièce de commande 18, on réalise le passage de l'une à l'autre des diverses configurations, en ordre inverse.

Il est possible d'intervenir sur la longueur des rayons sur lesquels sont placés les doigts 29, 30 et 31, sur l'angle de rotation de la pièce de commande 18 et sur la forme des lumières des leviers de commande de volets pour obtenir les positions intermédiaires desdits volets souhaitées.

Dans le mode de réalisation illustré aux figures 5 et 6, les leviers 33 et 36 sont solidaires des volets 4 et 6. Dans une variante, non représentée, et afin notamment de réduire les efforts de commande, les leviers 33 et 36 peuvent être reliés au volets 4 et 6 respectivement par l'intermédiaire de deux roues dentées montées chacune sur l'axe de chacun des volets 4 et 6 et qui coopèrent respectivement avec des secteurs dentés formés sur les leviers 33 et 36.

Le nombre de pièces constituant la commande est ici particulièrement réduit et, de plus, ce dispositif de commande assure le maintien des volets en position, lorsqu'ils ne sont pas sollicités ce qui, naturellement, simplifie beaucoup la réalisation pratique du dispositif.

**Revendications**

1. Dispositif pour distribuer le flux d'air dans une installation de climatisation de véhicule automobile, comprenant un boîtier caractérisé en ce de distribution du flux dans lequel des moyens de répartition sont adaptés à diriger le flux d'air entrant dans ledit boîtier vers trois orifices correspondant respectivement à une sortie pour la ventilation, à une sortie pour le désembuage et à une sortie pour le chauffage, les orifices de désembuage (8) et de chauffage (12) étant disposés de part et d'autre de l'orifice de ventilation (9), caractérisé en ce que les moyens de répartition consistent respectivement en un premier volet (4) et un second volet (6) tous deux mobiles, le premier volet (4) entre une position de fermeture de l'orifice de désembuage (8), pour laquelle ce volet dégage l'orifice de ventilation (9), et une position de fermeture de ce dernier orifice, pour laquelle ledit volet dégage l'orifice de désembuage, et le second volet (6), entre une position de fermeture de l'orifice de chauffage (12), pour laquelle ce volet dégage l'orifice de ventilation (9), et une position de fermeture de l'orifice de ventilation (9), pour laquelle ledit second volet dégage l'orifice de chauffage (12), ces deux volets (4, 6) ne fermant jamais simultanément l'orifice de ventilation (9), ces deux volets (4, 6) étant adaptés à prendre chacun toutes les positions intermédiaires entre leurs positions extrêmes et à assurer ainsi une répartition du flux entre les deux orifices (8, 9 et respectivement 12, 9) auxquels ils sont respectivement associés.

2. Dispositif selon la revendication 1, caractérisé en ce qu'il comprend une pièce de commande (18) reliée à un organe de commande à distance (17), ladite pièce étant adaptée à agir sur les premier et second volets (4 et 6).

3. Dispositif selon la revendication 2, caractérisé en ce que la pièce de commande (18) comporte trois organes de liaison (19, 29; 20, 30; 21, 31) adaptés à coopérer respectivement, le premier (19, 29) avec un organe complémentaire (22, 33) relié au premier volet (4) les deux autres (20, 30; 21, 31) avec des organes complémentaires (24, 26, 36) reliés au second volet (6).

4. Dispositif selon la revendication 3, caractérisé en ce que la pièce de commande (18) montée à rotation autour d'un axe (18a) comporte trois doigts (29, 30, 31) situés sur des rayons différents de cette pièce et coopérant respectivement avec une lumière (32) d'un levier (33) relié au premier volet (4) mobile autour d'un axe parallèle à l'axe (18a) de la pièce de commande (18), et avec deux lumières ouvertes (34, 35) ménagées aux deux extrémités d'un second levier (36) relié au second volet (6) et mobile autour d'un axe (7) parallèle également à ladite pièce de commande (18).

5. Dispositif selon la revendication 3, caractérisé en ce que la pièce de commande (18) est montée à rotation autour d'un axe (18a) et les organes de liaison de ladite pièce sont des secteurs dentés (19, 20, 21) cooperant avec des secteurs dentes (22, 23, 24) portes respectivement par le volet (4), par une pièce (24) solidaire du second volet (6) et par une pièce intermédiaire (26), cette dernière comportant en outre un autre secteur-denté (27) adapté à coopérer avec un secteur denté complémentaire (28) porté par la pièce (24) solidaire du second volet, les volets (4, 6) et les pièces (24, 26) respectivement, solidaire du second volet et intermédiaire, étant montées à rotation sur des axes parallèles à l'axe de rotation (18a) de la pièce de commande (18).

6. Dispositif selon la revendication 5, caractérisé en ce qu'à chacun des premier et second volets (4, 6) est associé un organe de rappel dudit volet vers une position de fermeture de l'un des orifices (8, 9, 12) contrôlé per le volet (4, 6), pour laquelle la liaison du volet (4 ou 6) avec la pièce de commande (18) est momentanément interrompue.


**Patentansprüche**

1. Vorrichtung für die Luftstromverteilung einer Klimaanlage für Kraftfahrzeuge, mit einem Luftstrom-Verteilgehäuse (1), in dem geeignete Verteilanordnungen den in das Gehäuse eintretenden Luftstrom zu drei Öffnungen hin richten, die einem Ventilationsauslaß, einem Abtauauslaß bzw. einem Heizauslaß entsprechen, wobei der Abtauauslaß (8) und der Heizauslaß (12) beidseits des Ventilationsauslasses (9) angeordnet sind, dadurch gekennzeichnet, daß die Verteilanordnungen aus einer ersten Klappe (4) und einer zweiten Klappe (6) bestehen, die beide beweglich sind, und zwar die erste Klappe (4) zwischen einer die Abtauöffnung (8) verschließenden Stellung, in der diese Klappe die Ventilationsöffnung (9) freigibt und einer diese Offnung verschließenden Stellung, in der diese Klappe die Abtauöffnung freigibt, und die zweite Klappe (6) zwischen einer die Heizöffnung (12) verschließenden Stellung, in der diese Klappe die Ventilationsöffnung (9) freigibt und einer die Ventilationsöffnung (9) verschließenden Stellung, in der diese zweite Klappe die Heizöffnung (12) freigibt, wobei die beiden Klappen (4, 6) niemals gleichzeitig die Ventilationsöffnung (9) verschließen, und beide Klappen (4, 6) in der Lage sind, alle Zwischenstellungen zwischen ihren Endstellungen einzunehmen und demzufolge eine Stromverteilung zwischen den beiden ihnen zugeordneten Offnungen (8, 9 und bzw. 12, 9) zu gewährleisten.

2. Vorrichtung nach Anspruch 1, dadurch gekennzeichnet, daß sie ein Steuerteil (18) aufweist, das mit einer Fernsteueranordnung (17) verbunden ist, wobei das Teil auf die erste und zweite Klappe (4, 6) einwirkt.

3. Vorrichtung nach Anspruch 2, dadurch gekennzeichnet, daß das Steuerteil (18) drei Verbindungsanordnungen (19, 29; 20, 30; 21, 31) aufweist, wobei die erste (19, 29) mit einer mit der ersten Klappe (4) verbundenen komplementären Anordnung (22, 33) zusammenwirkt und die beiden anderen (20, 30; 21, 31) mit komplementären mit der zweiten Klappe (6) verbundenen Anordnungen (24, 26, 36) zusammenwirken.

4. Vorrichtung nach Anspruch 3, dadurch gekennzeichnet, daß das um eine Achse (18a) drehbare Steuerteil (18) drei Finger (29, 30, 31) aufweist, die auf unterschiedlichen Radien dieses Teils angeordnet sind und mit einer Aussparung (32) eines Hebels (33) zusammenwirken, der mit der ersten Klappe (4) verbunden ist, die um eine Achse parallel zur Achse (18a) des Steuerteils (18) beweglich ist bzw. mit zwei offenen Aussparungen (34, 35) zusammenwirken, die an den beiden Enden eines zweiten Hebels (36) vorgesehen sind, der mit der zweiten Klappe (6) verbunden ist und um eine Achse (7) beweglich ist, die ebenfalls parallel zum Steuerteil (18) ist.

5. Vorrichtung nach Anspruch 3, dadurch gekennzeichnet, daß das Steuerteil (18) drehbar um eine Achse (18a) angeordnet ist und daß die Verbindungsanordnungen des Teils Zahnsegmente (19, 20, 21) sind, die mit Zahnsegmenten (22, 23, 25) an der Klappe (4) bzw. an einem Teil (24), das mit der zweiten Klappe (6) verbunden ist bzw. einem Zwischenteil (26) angeordnet sind, zusammenwirken, wobei letzteres zusätzlich ein weiteres Zahnsegment (27) trägt, das mit einem komplementären Zahnsegment (28) zusammenwirkt, das an dem an der zweiten Klappe befestigten Teil (24) vorgesehen ist, wobei die Klappen (4, 6) und die Teile (24, 26), die mit der zweiten Klappe bzw. dem Zwischenteil verbunden sind, drehbar um Achsen parallel zur Drehachse (18a) des Steuerteils (18) angeordnet sind.

6. Vorrichtung nach Anspruch 5, dadurch gekennzeichnet, daß jede der beiden Klappen (4, 6) mit einer Rückholanordnung für die Klappe verbunden ist, in Richtung einer Verschließstellung einer der Öffnungen (8, 9, 12), die von der Klappe (4, 6) gesteuert wird und für die die Verbindung der Klappe (4 oder 6) mit dem Steuerteil (18) zeitweise unterbrochen ist.


**Claims**

1. Apparatus for distributing the flow of air in a motor vehicle air conditioning installation comprising a casing (1) for distribution of the flow, in which distribution means are adapted to direct the flow of air passing into said casing towards three openings which respectively correspond to an outlet for ventilation, an outlet for demisting and an outlet for heating, the demisting opening (8) and the heating opening (12) being disposed on respective sides of the ventilation opening (9), characterised in that the distribution means respectively comprise a first flap (4) and a second flap (6) which are both movable, the first flap (4) being movable between a position of closing the demisting opening (8), in which said flap opens the ventilation opening (9), and a position of closing the last-mentioned opening, in which said flap opens the demisting opening, and the second flap (6) being movable between a position of closing the heating opening (12), in which said flap opens the ventilation opening (9), and a position of closing the ventilation opening (9), in which said second flap opens the heating opening (12), said two flaps (4, 6) never simultaneously closing the ventilation opening (9), said two flaps (4, 6) being adapted each to assume all intermediate positions between their limit positions and thus to provide for distribution of the flow between the two openings (8, 9 and 12, 9 respectively) with which they are respectively associated.

2. Apparatus according to claim 1 characterised in that it comprises a control component (18) which is connected to a remote-control member (17), said component (18) being adapted to act on the first and second flaps (4 and 6).

3. Apparatus according to claim 2 characterised in that the control component (18) comprises three connecting members (19, 29; 20, 30; 21, 31) of which the first (19, 29) is adapted respectively to co-operate with a complementary member (22, 33) connected to the first flap (4) while the other two connecting members (20, 30; 21, 31) are respectively adapted to co-operate with complementary members (24, 26, 36) connected to the second flap (6).

4. Apparatus according to claim 3 characterised in that the control component (18) which is mounted rotatably about an axis (18a) comprises three fingers (29, 30, 31) which are disposed on different radii of said component and which respectively co-operate with a window (32) in a lever (33) connected to the first flap (4) movable about an axis which is parallel to the axis (18a) of the control component (18), and with two open apertures (34, 35) provided at the two ends of a second lever (36) connected to the second flap (6) and movable about an axis (7) which is also parallel to said control component (18).

5. Apparatus according to claim 3 characterised in that the oontrol component (18) is mounted rotatably about an axis (18a) and the connecting members of said component are toothed sectors (19, 20, 21) co-operating with toothed sectors (22, 23, 25) respectively carried by the flap (4), by a component (24) which is fixed with respect to the second flap (6) and by an intermediate component (26), the last-mentioned component further comprising another toothed sector (27) adapted to co-operate with a complementary toothed sector (28) carried by the component (24) which is fixed with respect to the second flap, the flaps (4, 6) and the components (24, 26), being respectively fixed with respect to the second flap and the intermediate component and mounted rotatably about axes which are parallel to the axis of rotation (18a) of the control component (18).

6. Apparatus according to claim 5 characterised in that associated with each of the first and second flaps (4, 6) is a member for returning said flap towards a position of closing one of the openings (8, 9, 12) controlled by the flap (4, 6), in which the connection of the flap (4 or 6) to the control component (18) is momentarily interrupted.

DISTRIBUTION DESEMBUAGE

DISTRIBUTION VENTILATION

CHAUFFAGE HABITACLE

FIG.1

FIG.2

2a 2b 2c 2d 2e 2f

FIG.3

FIG.4

0 125 976

FIG.5

FIG.6